(19) **Europäisches Patentamt / European Patent Office / Office européen des brevets**

(11) **EP 1 983 699 B1**

(12) **EUROPEAN PATENT SPECIFICATION**

(45) Date of publication and mention
of the grant of the patent:
**08.12.2010 Bulletin 2010/49**

(51) Int Cl.:
*H04L 12/56* (2006.01)   *H04L 12/18* (2006.01)

(21) Application number: **07106262.4**

(22) Date of filing: **16.04.2007**

(54) **Multicast routing protocol for a clustered mobile ad hoc network**

Multicast-Routing-Protokoll für ein gebündeltes Ad-hoc-Mobilfunknetz

Protocole de routage multidiffusion pour un réseau ad hoc mobile de grappes

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**22.10.2008 Bulletin 2008/43**

(73) Proprietor: **Rockwell-Collins France**
**31700 Blagnac (FR)**

(72) Inventor: **Canourgues, Lucile**
**31400, TOULOUSE (FR)**

(74) Representative: **Augarde, Eric et al**
**BREVALEX**
**56 Boulevard de l'Embouchure,**
**Bât. B**
**B.P. 27519**
**31075 Toulouse Cedex 2 (FR)**

(56) References cited:
**EP-A- 1 324 532**   **WO-A-2006/130278**
**US-A1- 2005 215 280**

**Description**

**TECHNICAL FIELD OF THE INVENTION**

The present invention relates to the field of mobile *ad hoc* networks, also called MANETs, and more specifically to a protocol for multicast routing in such networks.

**BACKGROUND OF THE INVENTION**

Conventional multicast routing protocols have been originally designed for wired networks and are poorly adapted to *ad hoc* networks.

Different types of multicast routing protocols have been proposed for taking into account the characteristics of *ad hoc* networks, i.e. limited bandwidth, dynamic topology, lack of infrastructure, limited battery power, limited physical security. These protocols can be classified as mesh-based or tree-based depending upon whether they build a mesh or a tree over which the multicast traffic is routed.

An example of such a protocol is presented in document EP-A2-1324532.

Mesh-based protocols like ODMRP (On Demand Multicast Routing Protocol) may involve a plurality of redundant paths between a source and a receiver whereas only one such path exists in tree-based protocols such as MAODV (Multicast Ad hoc On Demand Vector). Tree-based multicast routing is therefore generally considered more efficient in terms of number of datagrams to be forwarded. However, mesh-based multicast protocols are more robust owing to the availability of multiple paths between the source and the receiver. They allow indeed datagrams to be delivered to the multicast receivers even if some links fail.

Tree-based multicast protocols can be divided into two types: source-tree-based and shared-tree-based. In source-tree-based multicast protocols, the routing tree is rooted at the source. By contrast, in shared-tree-based protocols a single routing tree is shared by all sources of the multicast group and is rooted at a predetermined node, referred as the core node. Source-tree-based multicast protocols generally perform better under heavy traffic loads because of a more efficient traffic distribution among the different links. On the other hand, shared-tree-based multicast protocols are more scalable with respect to the number of multicast sources and multicast groups. The main problem affecting a shared-tree-based protocol is that it heavily depends on the integrity of the core node, in other words a core node deficiency may lead to a severe multicast routing failure.

Although mesh-based and tree-based multicast routing protocols may perform quite well in specific scenarios, they tend to perform poorly as the network becomes large i.e. when the number of nodes increases. Some applications of *ad hoc* networks such as military ground or search and rescue operations can easily involve several hundreds of nodes. For such applications, the scalability of the routing protocol, i.e. the ability of the routing protocol to maintain a high delivery ratio without incurring large overhead, independently of the size of the network, is an essential issue. Conventional "flat" multicast routing protocols are therefore not efficient for large networks. To achieve scalability, it has been proposed to introduce some virtual hierarchy in the network, i.e. to partition the network into groups of nodes, also called clusters and to elect a cluster head per cluster. Such an example is given in document WO-A1-2006/130278.

For example, the CBRP protocol (Cluster Based Routing Protocol), described e.g. in the IETF draft of M. Jiang et al. published in July 1999, creates an hierarchical structure for implementing point to point routing.

The CBMRP protocol (Cluster Based Multi-source Multicast Routing Protocol) described e.g. in the article of Yi-Yu Su et al. entitled "An efficient multi-source multicast routing protocol in mobile ad hoc networks" published in Proc. of the 11th International Conference on Parallel and Distributed Systems, July 2005, Vol. 1, pages 8-14 also makes use of node clustering for creating a tree shared by all clusters. All multicast sources and multicast member nodes, either relaying or receiving, belong to the shared tree. The structure of this tree is set up by the gateway nodes, i.e. the nodes at the cluster boundaries, which broadcast route construction packets. The tree structure is periodically maintained to adapt itself to the changing topology of the network.

In general, the set up and maintenance of a tree or mesh structure above the clusters involves the exchange of numerous messages, like "hello" or "join/leave" messages. These messages may lead to a considerable amount of overhead.

The object of the present invention is to propose a robust and scalable routing multicast protocol for a clustered *ad hoc* network which does not exhibit the drawbacks recited above, and in particular does not require extensive exchange of control messages throughout the network.

**SUMMARY OF THE INVENTION**

This problem is solved by implementing the multicast routing method defined in appended claim 1. Various advantageous embodiments are given in the claims depending thereon.

**BRIEF DESCRIPTION OF THE DRAWINGS**

Fig. 1 shows an example of a clustered network;

Fig. 2 shows the flowchart of a multicast routing method in a clustered network according to a first embodiment of the invention;

Figs. 3A to 3C illustrate successive steps of building a distance vector routing table in the routing method according to the first embodiment of the invention;

Fig. 4 schematically illustrates an example of exchange of multicast membership information in the routing method according to the first embodiment of the invention;

Fig. 5 schematically illustrates an example of data packet forwarding in the routing method according to the first embodiment of the invention;

Fig. 6 shows the flowchart of a multicast routing method in a clustered network according to a second embodiment of the invention;

Figs. 7A to 7C show successive steps of building a database of inter-cluster links in the routing method according to the second embodiment of the invention;

Fig. 8 schematically illustrates an example of data packet forwarding in the routing method according to the second embodiment of the invention.

**DESCRIPTION OF ILLUSTRATIVE EMBODIMENTS**

The basic principle of the multicast routing method according to the invention is that each data packet makes its own path through the network by hopping from cluster to cluster. Each cluster is responsible for forwarding or not forwarding a data packet and for autonomously deciding to which neighbouring cluster it forwards the data packets. Contrary to the prior art, there is no complicated shared tree or mesh structure to be set up and maintained.

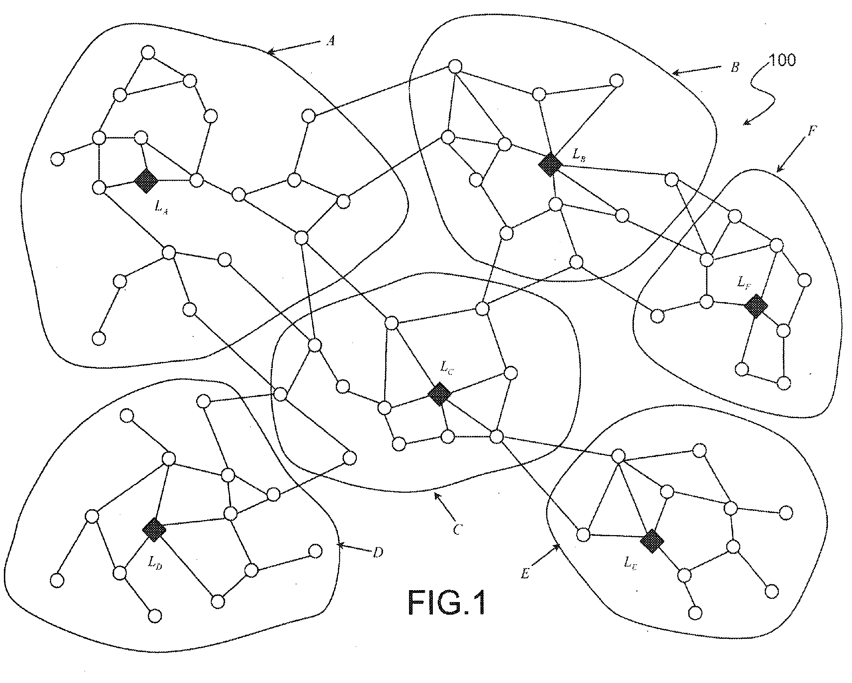

Fig. 1 illustrates an example of a clustered network, the multicast routing method of the invention applies to. The network comprises a plurality of nodes, which in general can be mobile. These nodes are grouped into clusters according to a conventional clustering process, as disclosed e.g. in the aforementioned IETF draft. It should be noted that the clustering step itself is not part of the present invention.

Each node of the network belongs to a single cluster and each cluster is represented by a cluster head. Each cluster head knows the nodes belonging to the cluster it represents. It is also aware of the identity of the neighbouring clusters. More specifically, two clusters are regarded as neighbours if they contain at least a couple of neighbouring nodes. Two nodes of the network are considered as neighbours if there is a direct radio link between them.

In the present example, the *ad hoc* network 100 is partitioned into six clusters denoted *A* to *F*, the cluster heads thereof being referred to as $L_A$ to $L_F$, respectively. With the definition given above, the neighbours of *A* are the clusters *B,C,D* and the neighbours of *E* only amount to *C*.

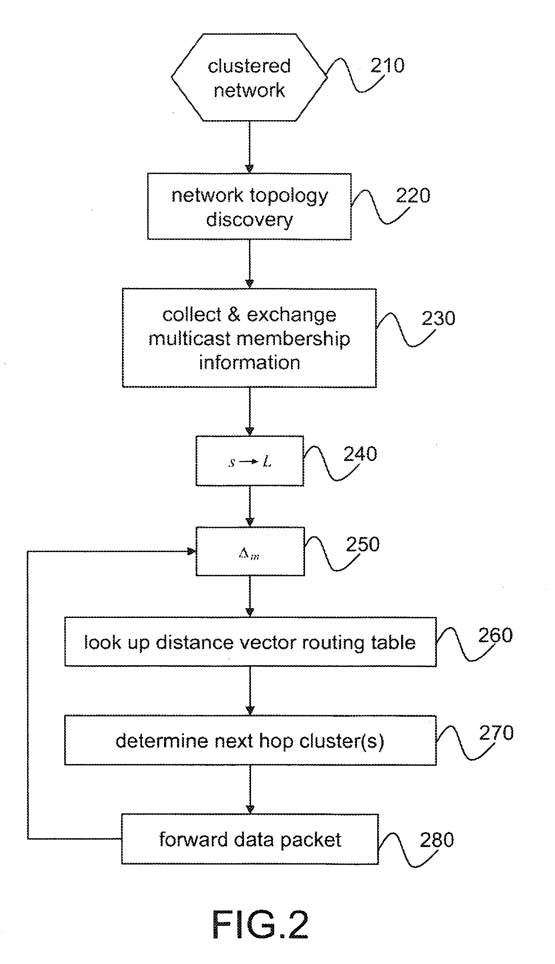

Fig. 2 diagrammatically shows a flowchart of the multicast routing method according to a first embodiment of the invention.

The routing method starts at step 210 after the *ad hoc* network has been clustered. At this stage, every cluster has an elected head which is aware of the nodes of the cluster and of the neighbouring cluster heads.

At step 220, the cluster heads discover the topology of the network at the cluster level by building up a distance vector routing table. More precisely, this table contains for each and every pair of clusters $(C_i, C_j)$, the number of hops for going from cluster $C_i$ to cluster $C_j$ as well as the next-hop cluster $C_h$ for reaching cluster $C_j$.

At step 230, the cluster heads collect and exchange the multicast membership information. Each multicast group is defined as a set of nodes, also called multicast members, one of them being a data source and the other nodes being data sinks. If we denote $m_k$, $k = 1,..,K$ the multicast groups and $M = \{m_1, m_2, ..., m_K\}$ the list of these groups, each cluster head of a cluster $C_i$ determines the subset $S^M_i$ of $M$ constituted by the multicast groups represented in $C_i$, i.e. having at least a member in $C_i$. It is emphasized that $C_i$ does not need to know which cluster node belongs to which multicast group. The subsets $S^M_i$ are then exchanged among the different cluster heads.

Step 240 is carried out whenever a data packet is to be sent from a data source to the data sinks of a multicast group. In such instance, the source sends the data packets to the head of the cluster it belongs to. Each multicast data packet contains an identifier $m \in M$ of the multicast group to which it has to be delivered.

In 250, the cluster head looks up in the multicast membership table the clusters $C_j$ for which $m \in S^M_j$, -i.e. determines the list $\Lambda_m$ of clusters having at least a node belonging to *m*.

From the list $\Lambda_m$, the cluster head decides which neighbouring cluster head(s), if any, it has to forward the data packet to.

More specifically, at step 260, the cluster head having received the multicast data packet looks up in a distance routing table and determines therefrom the next hop cluster(s) if any.

Steps 250 through 280 are repeated at each cluster head along the multicast paths. When no more cluster head has a data packet to forward, the algorithm stops.

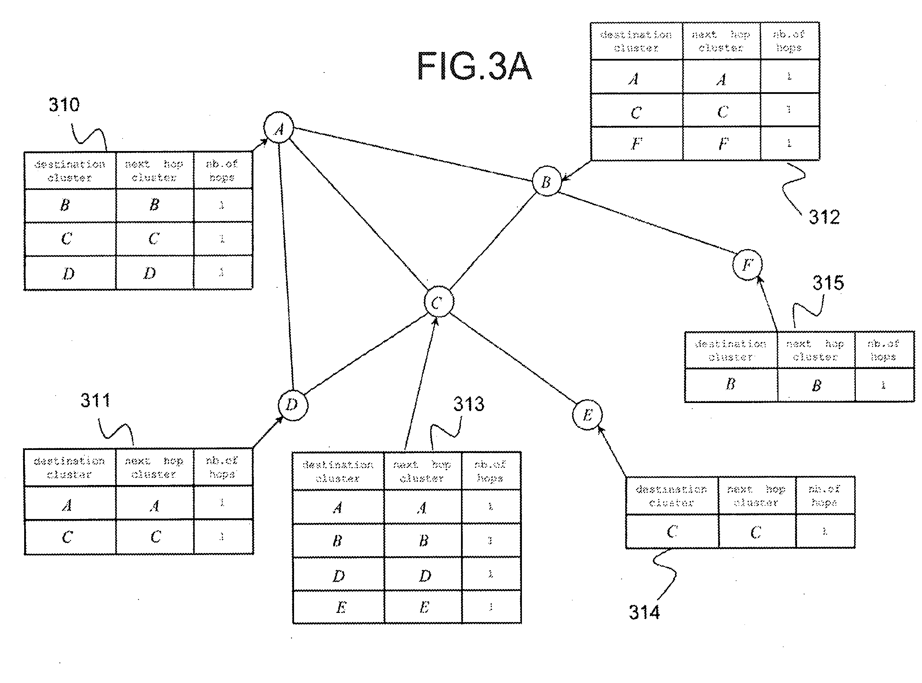

Figs. 3A to 3C show the successive steps of topology discovery.

To simplify the illustration, only the topological graph of the network, at the cluster level, has been represented in Figs. 3A through 3C. According to this representation, the graph vertices denote the clusters/ cluster heads and an edge between two vertices symbolizes a neighbourhood relationship within the meaning defined above.

From the clustering process, each cluster head knows its neighbouring clusters. We will assume in the following that every cluster head has stored the identity of its neighbours in a table.

Each cluster head iteratively builds up a so called distance vector cluster routing table. This table has as entries the other clusters/ cluster heads of the network. More specifically, each entry comprises an identifier of the destination cluster, an identifier of the next hop cluster as well as the number of cluster hops to reach the head of the destination cluster.

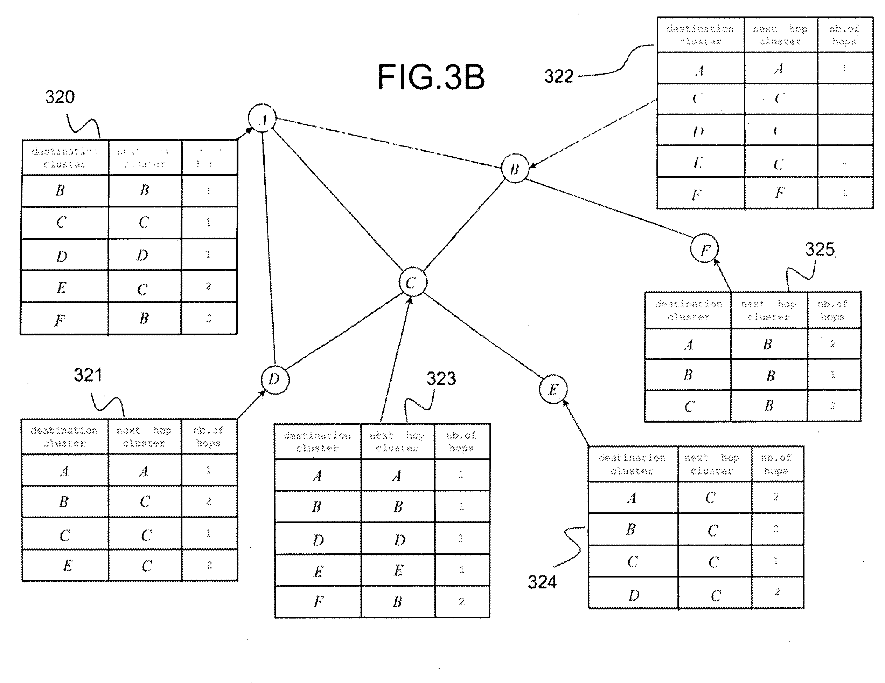

Fig. 3A illustrates the initialization step of the topology discovery. The distance vector routing table locally stored at each cluster head contains as entries the neighbouring clusters. For example, table 310 contains three entries corresponding to clusters *B,C* and *D* respectively. The next hop clusters for reaching these clusters are obviously the same, as stated in the second column of the table. The last column gives the number of cluster hops for reaching the destination clusters, here "1" since they are all neighbours of *A*. Once the cluster heads have initialized the tables 310 to 314, they send them to their respective neighbours, as illustrated in Fig. 3B.

After having been updated, said tables not only comprise the 1-hop but also the 2-hop destination clusters. For example, table 320 related to cluster *A,* contains now two new entries *E* and *F* within 2-hop reach. These two entries having been forwarded by cluster C and B respectively, the next-hop cluster column is filled in accordingly. The entries *A, B* of table 313, sent by cluster *C*, are discarded since *A* is the receiving cluster itself and the *B* is already present in the table, with a lower number of hops. The entries *A, C* of table 312, sent by cluster *B*, and the same entries of table 311, sent by cluster *D* have been discarded for the same reason.

Once tables 320 to 324 have been updated, they are forwarded to the neighbouring cluster heads.

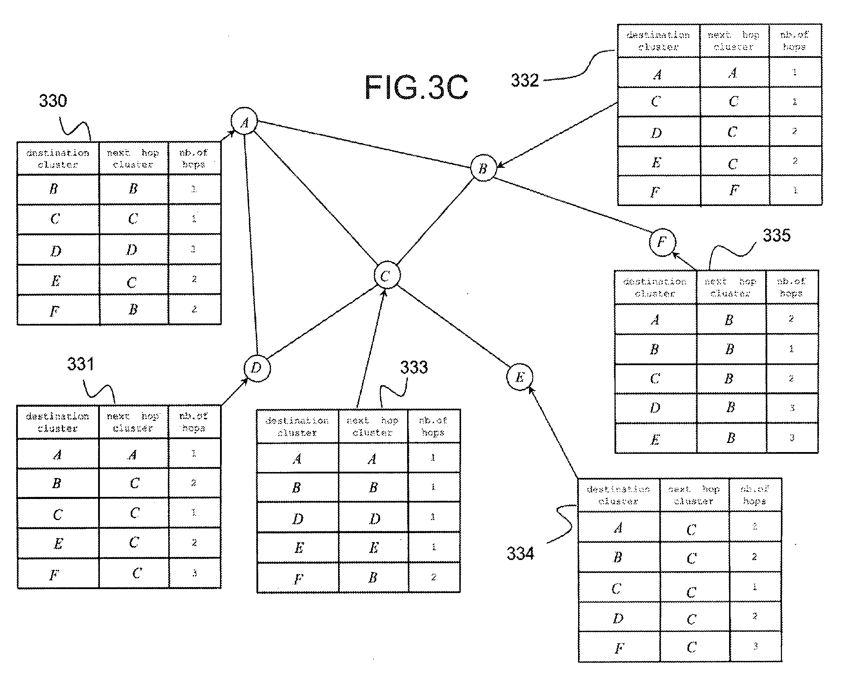

Fig. 3C shows the situation after the update. The tables now contain the 1-hop to 3-hop destination clusters, that is, in the present instance, all the clusters of the network. It should be noted that table 330 has not been updated since tables 321, 322 and 323 respectively sent by clusters *D,B* and C at the previous step, does not introduce further entries in table 330. By contrast, table 335 stored at the head of cluster *F* contains now two further entries *D* and *E* which are at a 3-hop distance. Again, since these two entries were introduced by table 322 of cluster B, the next-hop cluster column is filled in with B for these entries.

If the network is partitioned into N clusters the topology discovery process ends after *N-*1 iterations at most and in fact much less in practice if the graph is not linear.

After the topology discovery process has been completed, each cluster head knows, first, its routing distance to any other destination cluster head and, second, the neighbouring cluster head it has send a data packet for any destination cluster.

The topology of the *ad hoc* network is relatively stable at the cluster level. However, each time a change is detected by the clustering algorithm, the cluster head sends an update message to its neighbours. It should be noted that this update is not made periodically but is merely triggered by a change event. Advantageously, this message does not contain the whole new vector cluster routing table but only the difference with the previous one. The update process then propagates to the 2-hop, 3-hop destination clusters in the same way as already described.

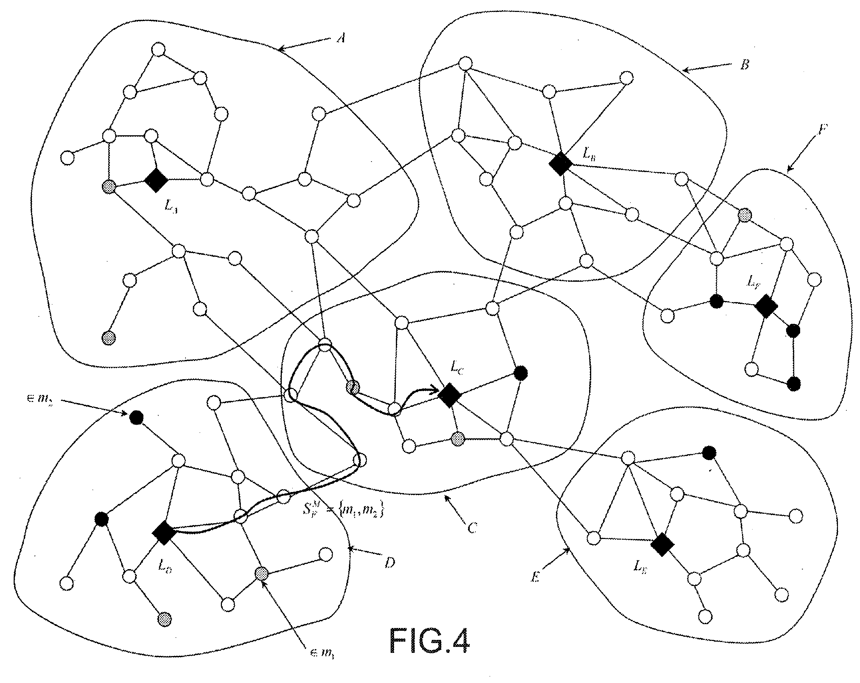

Fig. 4 illustrates the step of exchanging the multicast membership information among the various cluster heads.

It is assumed that every cluster head knows which multicast group(s) is/are represented in its cluster, if any. This can be achieved in different ways. For example, the multicast membership can be inferred from the identity of the nodes themselves. This would generally be the case in a planned operation where each node has a predetermined role to play. As the cluster head knows the list of the nodes belonging to its cluster, it may obtain the list of multicast groups represented therein, referred to in the following as the local multicast membership table $S^M_i$.

Once the local multicast membership tables have been established, each cluster head transmits a message to its neighbours containing its local multicast membership table. This message is then forwarded to the 2-hop cluster heads and this process is repeated until every cluster head has knowledge of $\bigcup\limits_{i=1}^{N} S^M_i$ where *N* is the number of clusters.

$S^M = \bigcup\limits_{i=1}^{N} S^M_i$ is the multicast membership table of the network.

As nodes leave and join the clusters, the membership tables may vary. In order to account for such changes, the cluster heads exchange update information. The update information is advantageously of differential nature, in other words only the variations of the local membership tables are exchanged among the cluster heads.

In the present example, there are only two multicast groups $m_1$ and $m_2$. As cluster $D$ contains nodes belonging to either cluster, the local membership table of $D$ is $S_D^M = \{m_1, m_2\}$, which is forwarded to cluster $C$ and then to clusters $A, B$ and $E$.

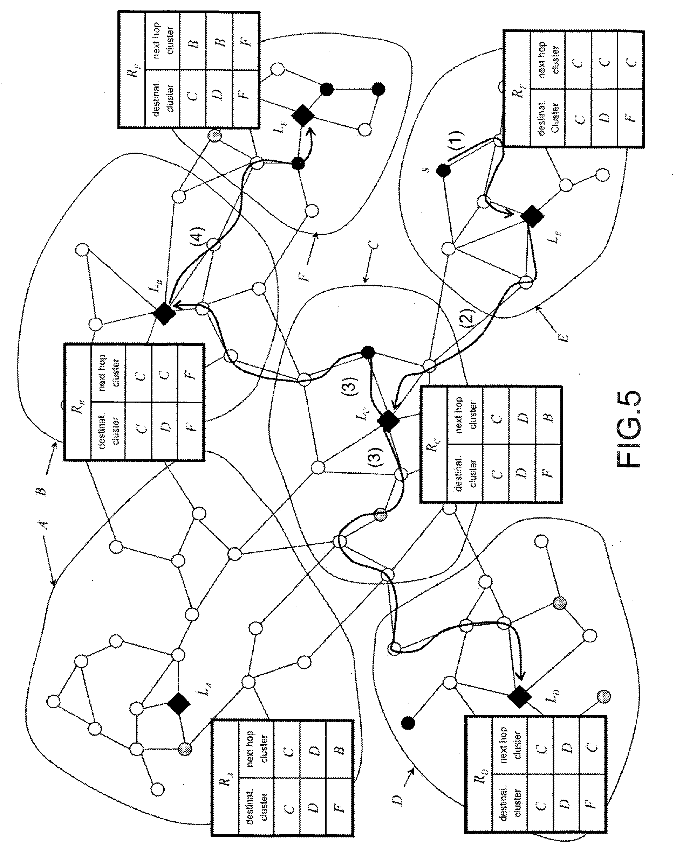

Fig. 5 illustrates how a multicast data packet is forwarded in the routing method according to the first embodiment.

Whenever a source $s$ has a data packet to be transmitted to a multicast group, this data packet is sent first to the head of the cluster the source belongs to. The data packet contains as argument the identifier of the multicast group, denoted $m$.

The cluster head determines, from the membership table, the list $A_m$ of the clusters comprising a member of the multicast group $m$.

For each destination cluster of the list $A_m$, the cluster head then obtains, from the distance vector routing table, the next hop cluster(s) the data packet should be forwarded to.

When a cluster head receives such a data packet, it processes it as follows:

- if the cluster head has already received this packet, it discards it without forwarding it;
- else, the cluster head determines from the membership table the list $\Lambda_m$ of clusters and the next hop cluster(s) the data should be forwarded to and, then, distinguishes as follows:

  o if a next hop cluster is one from which the data packet has been received, the data packet is not sent back to this cluster;
  o else, the data packet is sent to the next hop cluster;
  o if the present cluster belongs to the membership table, the packet is delivered locally to the member(s) of the multicast group.

For example, let us assume that node s of cluster $E$ has to transmit a data packet to its multicast group $m$, represented by the black nodes in Fig. 5.

First, s sends the data packet to the head of the cluster $E$, namely $L_E$. From the locally stored multicast membership table $S^M$, $L_E$ deduces that $C,D,F$ are the destination clusters of multicast group $m$, i.e. $\Lambda_m=\{C,D,F\}$. The cluster head $L_E$ then looks up the entries $C,D,F$ in the distance vector routing table $R_E$. For all clusters $C,D,F$, the next-hop cluster is C. The data packet is therefore forwarded to cluster head $L_c$.

$L_c$ determines in turn from the multicast membership table $S^M$, the list of clusters involved in the multicast group $m$, that is $\Lambda_m=\{C,D,F\}$. C is the local cluster itself. Therefore the cluster head $L_c$ delivers the data packet to the nodes of cluster C, belonging to the multicast group $m$. As to the other clusters of $\Lambda_m$, the next-hop clusters $D,B$ are retrieved from the distance vector routing table $R_C$. The data packet is thus forwarded to the neighbouring cluster heads $L_D$ and $L_B$.

Upon reception of the data packet $L_D$ looks up in turn in its multicast membership table $S^M$ and obtains the list $\Lambda_m=\{C,D,F\}$. D being the local cluster itself, cluster head $L_D$ forwards the data packet to the local nodes of $D$ belonging to the multicast group $m$. As to the remaining clusters $C$ and $F$, the distance vector routing table $R_D$ gives $C$ as next-hop cluster. However, since the data packet has been received from $L_C$, it is not sent back thereto.

Turning now to cluster head $L_B$, it obtains in turn the list $\Lambda_m$ from the multicast membership table $S^M$. B does not belong to the list $\Lambda_m$ and hence the data packet is not delivered locally. The multicast routing table $R_B$ indicates C and F as next-hop clusters. As $L_B$ has received the data packet from $L_C$, it is only forwarded to $L_F$.

Upon reception of the data packet, $L_F$ obtains in turn the list $\Lambda_m$ from the membership table $S^M$. Since cluster F belongs to this list, $L_F$ forward the data packet to the local nodes of F which are members of the multicast group $m$. The routing table $R_F$ gives $B$ as next-hop cluster. Since $L_F$ has received the data packet from $L_B$, it is not sent back to this cluster and the routing process stops.

It is important to note that the various cluster heads intervening in the rooting process are independent from each other: different paths may lead to the same destination cluster, thus making the present multicast routing method particularly robust. There is also no need to construct and maintain a fixed mesh or shared tree structure, which is resource consuming in terms of traffic (flooding or scoped flooding of control messages).

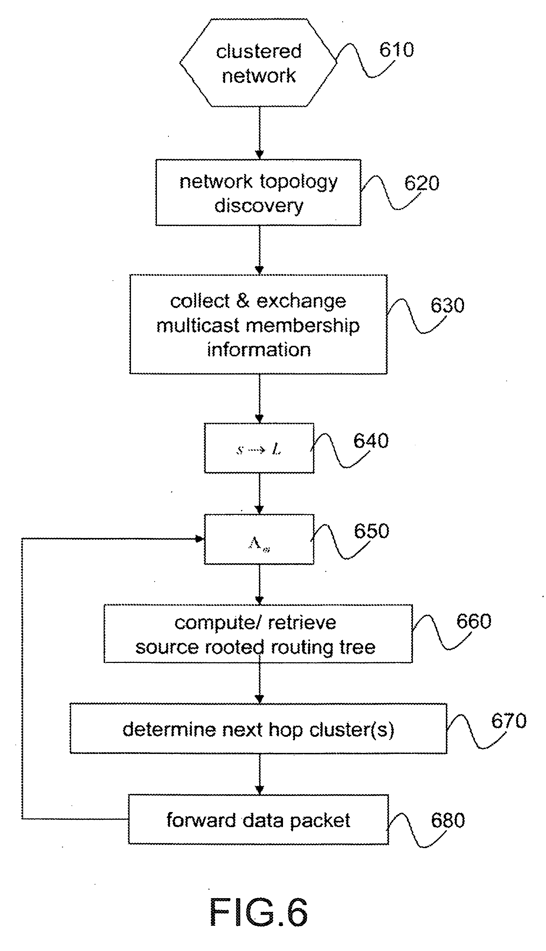

Fig. 6 shows a flowchart of the multicast routing method according to a second embodiment of the invention.

As in the first embodiment, the algorithm starts at 610 with a clustered network.

At step 620, the cluster heads cooperatively discover the topology of the network at the cluster level. By contrast with the first embodiment, the precise topology of the clustered network is described in terms of inter-cluster links and not simply by distances between clusters. More specifically, a table of all existing inter-cluster links $C_i\text{-}C_j$ is built up and then shared by the cluster heads.

At step 630, the cluster heads collect and exchange the multicast membership information in the same way as in step 230.

Step 640 is executed whenever a source needs to send a multicast data packet. The source forwards this packet to the head of the cluster.

In 650, the cluster head looks up in the multicast membership table the clusters $C_j$ for which $m \in S_j^M$, i.e. determines the list $\Lambda_m$ of clusters having at least a node belonging to $m$.

From the list $\Lambda_m$, the cluster head computes in 660 the multicast routing tree, rooted at s and ending at the destination clusters of $\Lambda_m$.

It then determines in 670 the next hop cluster(s) if any, as will be explained further below. The data packet is then forwarded in 680.

Steps 650 through 680 are repeated at each cluster head along the routing tree.

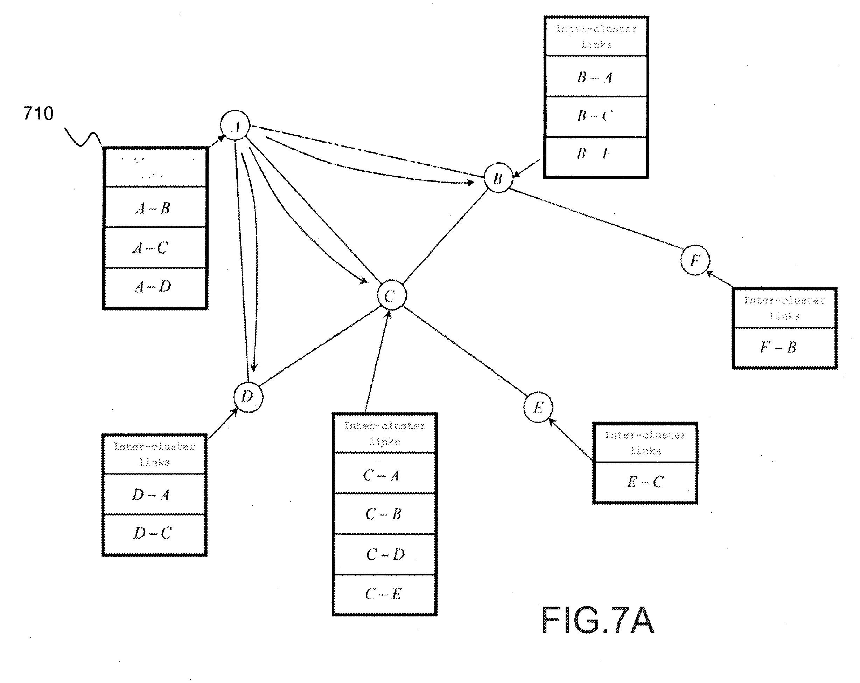

Figs. 7A to 7C show the successive steps of topology discovery according to the second embodiment.

Here again, only the topological graph of the network at the cluster level has been represented.

Fig. 7A shows the initialization step of the topology discovery.

Each cluster head registers in a local table 710 the existing links with the other clusters. For example the inter-cluster link table stored at cluster head $L_A$ contains the links *A-B, A-C, A-D.* Then, each cluster head sends its local table to its neighbours.

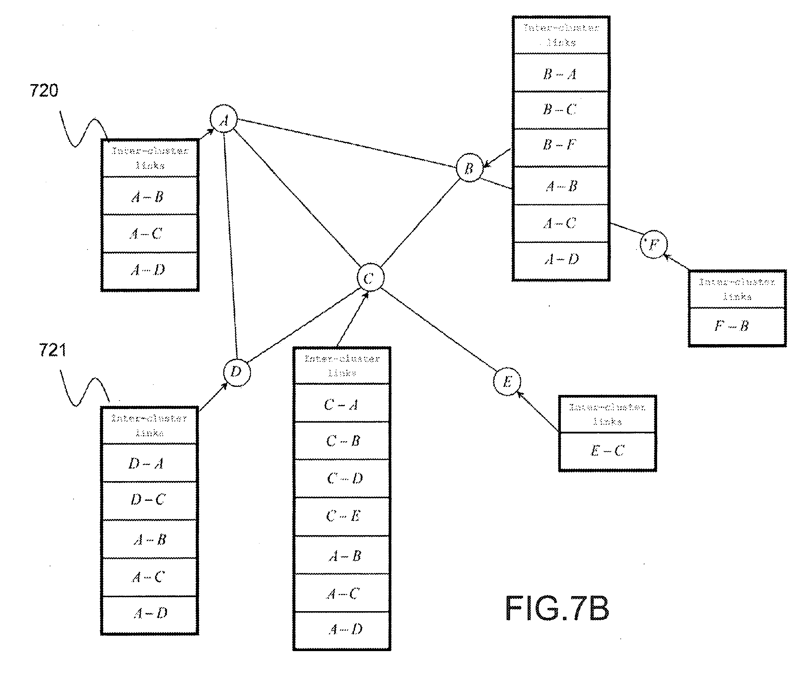

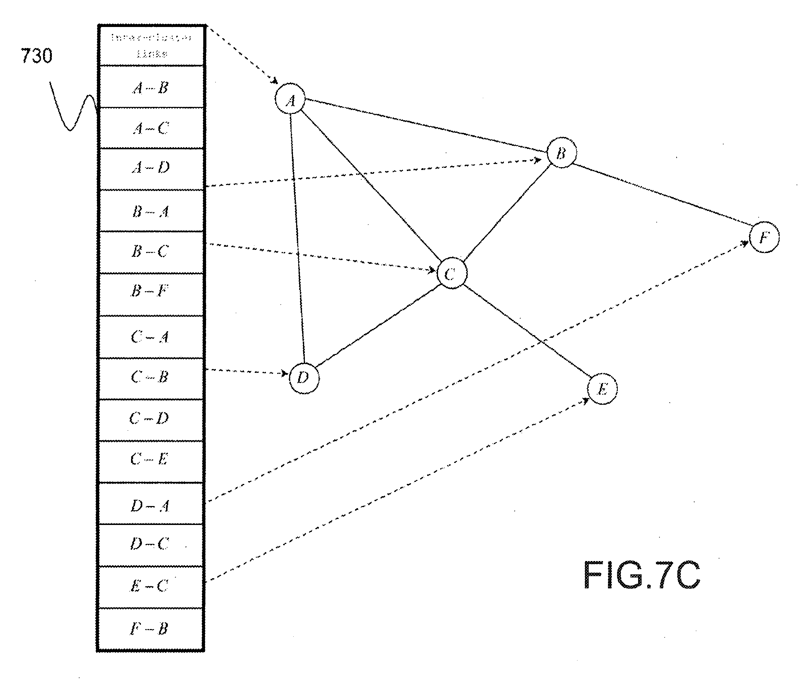

The situation at the next step is illustrated in Fig. 7B. At each cluster head, the received table is merged with the local inter-cluster link table to obtain a new local table 721. This process is repeated until all the cluster heads shared the same table 730, labelled *ICL,* as illustrated in Fig. 7C. The table *ICL* gives a complete picture of the topology of the network at the cluster level.

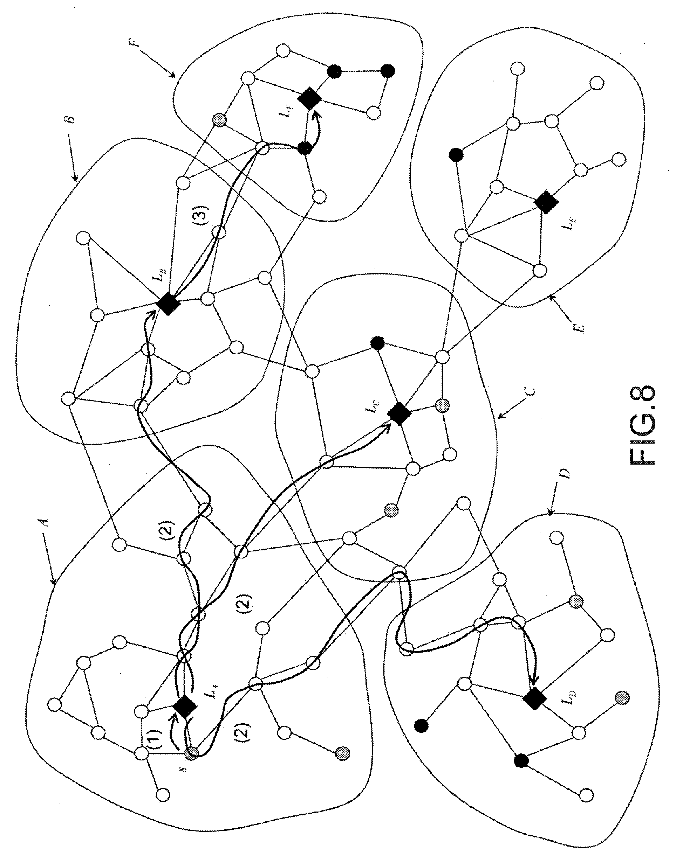

Fig. 8 illustrates how a multicast data packet is forwarded according to the routing method of the second embodiment.

As in the first embodiment, when a source has to transmit a data packet to the members of a multicast group, the data packet is first sent to the head of the cluster the source belongs to. The data packet contains as argument the identifier of the multicast group, denoted *m.*

The cluster head then determines, from the membership table, the list $\Lambda_m$ of the clusters comprising a member of the multicast group *m.*

For each destination cluster of $\Lambda_m$, the cluster head then finds a path between itself and this destination cluster, by using the inter-cluster link table *ICL.* This gives the routing tree, rooted at the head of the cluster where the source is located, and the branches of which end at the destination clusters. In particular, the cluster head (the root) knows which branch(es) to use for the first hop.

It is important to note that the routing tree is not a built-up structure as in the prior art but refers here to a set of multicast paths forming *de facto* a tree, computed by the cluster heads in a decentralized way. Furthermore, the routing tree needs not be optimum in terms of number of hops. Nevertheless, the same tree computation algorithm should be carried out for all cluster heads of the network. An example of routing tree computation algorithm is given in the appended annex.

When a cluster head receives the data packet along a path of the routing tree, the received data packet is processed as follows:

- the cluster head retrieves the members of the multicast group from the membership table $S^M$ and the identifier *m*;
- if the present cluster belongs to the membership table, the packet is delivered locally to the members of the multicast group;
- it computes the routing tree between the source cluster and the destination clusters;
- knowing the description of the routing tree and the node from which it has received the data packet, the cluster head then determines the remaining link(s) over which the data packet has to be forwarded. If there is no such remaining link, then the routing process stops.

Advantageously, the result of the computation of the routing tree is saved in a local cache memory, so that the routing tree need not be computed over again when the cluster head receives a subsequent packet for the same multicast group. However, if the cluster head had received a message for updating the membership information, the computation of the routing tree would have to be carried out anew.

In the illustrated example, the source s in cluster *A* has to transmit a data packet to the members of multicast group *m.* Hence, s forwards said data packet to the cluster head $L_A$. First, $L_A$ obtains the list $\Lambda_m$ of destination clusters from the multicast membership table $S^M$ and the identifier *m* of the data packet. Then, $L_A$ computes the routing tree to the destination clusters by using the inter-cluster link table *ICL.* In the present instance, $\Lambda_m$ ={C,D,F} and the paths of the routing tree are: $A \to D$, $A \to C$, $A \to B \to F$. Once the routing tree is obtained, $L_A$ forwards said data packet over the 1-hop links $A \to B$, $A \to C$, $A \to D$, i.e. to the cluster heads $L_B, L_C, L_D$.

Upon reception of the data packet, the cluster heads $L_B, L_C, L_D$ determine in turn the list $\Lambda_m$ from the membership table, and then compute the routing tree rooted at $L_A$ and ending at the destination clusters. Of course, if the routing tree for $\Lambda_m$ is already stored in the cache memory, it is simply retrieved and not calculated again. As each cluster head knows its location within the routing tree and the node from which it has received the data packet, it can deduce the remaining links over which the packet has to be forwarded. The process is repeated until all the destination clusters are reached.

It should be noted that, by contrast with the first embodiment, there is only one routing path between the data source and a given destination cluster. Consequently, the routing method according to the second embodiment is slightly less robust. However, it generates no redundant traffic and therefore significantly less overhead.

### ANNEX

Let $C$ be the list of all clusters in the network not included in any path of the routing tree;
Let $C_m$ be the list of the clusters where there are members and for which a path still need to be found;
Let $L$ be the set of "cluster links";
Let $S$ be the cluster source;
Let *paths* be the set of the computed paths;
Let *PathsList* be the list of paths from the source cluster $S$ to the cluster members;
Let *pathsNew* be the current list of paths computed in a

Initialisation:

```
Paths = {[S]}
C = C-{S}
Cm = Cm -{S}

While Cm ≠ ∅
      For all path P of Paths
            Neighbour = list of neighbours of the last
      cluster of P (this list is derived from L)
            For all cluster Cn of  Neighbour
                  If Cn ∈ C
                        Create a new_path  = path + {Cn}
                  (where "+" is the concatenation
                  operation)
                        pathsNew = {pathsNew,{ new_path  }}
                        C = C-{Cn}
                        If Cn ∈ Cm
                              PathsList  = {PathsList, {
      new_path }}
                              Cm  = Cm  -{Cn}
                        EndIf
                  EndIf
```

```
                    EndFor
                EndFor
                Paths = pathsNew
            EndWhile
```

## Claims

1. Method for routing a multicast data packet in an ad hoc network, said network being partitioned into clusters of nodes, each cluster having a cluster head, the method being defined by:

   - a step (220, 620) of discovering the topology of the network by said cluster heads so that each cluster head has a description (330-335,730) of the network topology;
   - a step (230, 630) of exchanging multicast membership information among said cluster heads so that each cluster head has a multicast membership table ($S^M$) indicating, for each cluster, which multicast group(s) is represented therein;
   - said multicast data packet being routed through the network by a plurality of cluster heads, each cluster head independently deciding on the next cluster head(s) to forward the packet to, if any, on the basis of the multicast group ($m$) the data packet is destined to, said multicast membership table and said description of the network topology.

2. Method for routing a multicast data packet according to claim 1, **characterised in that** said multicast data packet is sent by a data source to a plurality of members of a multicast group, said data source forwarding first (240,640) said packet to the head of the cluster it belongs to.

3. Method for routing a multicast data packet according to claim 1 or 2, **characterised in that** the multicast membership table is built up cooperatively by the cluster heads, each cluster head determining which multicast group(s) is(are) represented in its own cluster and sending this information to the other cluster heads.

4. Method for routing a multicast data packet according to any preceding claim, **characterised in that**, for any cluster head, said description of the network topology, comprises a routing table (330-335) having as entries the possible destination clusters of the network, each entry relative to a destination cluster giving a next hop cluster for reaching said destination cluster.

5. Method for routing a multicast data packet according to claim 4, **characterised in that** said table further comprises, for each destination cluster, a number of cluster hops to reach said destination cluster.

6. Method for routing a multicast data packet according to claim 5, **characterised in that** said routing table is built up cooperatively by the cluster heads, each cluster head:

   (a) establishing a table whose entries are the neighbouring cluster heads and forwarding them said list;
   (b) appending to said table the entries of the tables received from said neighbouring cluster heads which are not already present in said table, after having incremented their respective number of cluster hops;
   (c) forwarding to said neighbouring cluster heads the table thus updated;

   said steps (b) and (c) being iterated until each table contains as entries all clusters of the network but the cluster it belongs to.

7. Method for routing a multicast data packet according to claim 6, **characterised in that** each cluster head checks whether said multicast data packet has already been received, and in the affirmative, discards it.

8. Method for routing a multicast data packet according to claim 6 or 7, **characterised in that** said cluster head receiving a multicast data packet which has not already been received:

(a) retrieves from said data packet the multicast group ($m$) it is destined to;

(b) derives from said multicast membership table the list ($\Lambda_m$) of destination clusters corresponding to said multicast group;

(c) if its cluster belongs to this list, forwards said data packet to the nodes of this cluster belonging to said multicast group.

9. Method for routing a multicast data packet according to claim 8, **characterised in that** said cluster head receiving said multicast data packet which has not already been received further:

(d) determines from said routing table, for each destination cluster of the list of destination clusters, to which neighbouring cluster head(s), if any, said data packet is to be forwarded;

(e) forwards said data packet to each of said destination clusters but to the one from which it was received.

10. Method for routing a multicast data packet according to any claim 1 to 3, **characterised in that** the description of the network topology comprises a list (730) of links between the clusters.

11. Method for routing a multicast data packet according to claim 10, **characterised in that** said list of links is built up cooperatively by the cluster heads, each cluster head:

(a) establishing a list of links between its cluster and the neighbouring clusters and forwarding said list to the neighbouring cluster heads ;

(b) appending to said list the links recited in the lists received from said neighbouring cluster heads which are not already present in said list,

(c) forwarding to said neighbouring cluster heads the list of links thus updated;

said steps (b) and (c) being iterated until each list contains all the links between clusters.

12. Method for routing a multicast data packet according to claim 11, **characterised in that** each cluster head receiving said multicast data packet:

(a) retrieves from said data packet the multicast group ($m$) it is destined to;

(b) derives from said multicast membership table the list ($\Lambda_m$) of destination clusters corresponding to said multicast group;

(c) if its cluster belongs to this list, forwards said data packet to the nodes of this cluster belonging to said multicast group.

13. Method for routing a multicast data packet according to claim 12, **characterised in that** each cluster head receiving said multicast data packet further:

(d) determines from said list of links (*ICL*) the routing tree corresponding to said multicast group;

(c) forwards said data packet over the links originating from its cluster but the link over which said data packet was received.

14. Method for routing a multicast data packet according to claim 13, **characterised in that** said routing tree is stored in a cache memory for later retrieval.

**Patentansprüche**

1. Verfahren zum Routing eines Multicast-Datenpaketes in einem Ad-hoc-Netzwerk, wobei das Netzwerk in Cluster von Knoten unterteilt ist und jeder Cluster einen Cluster-Head hat, und das Verfahren definiert ist durch:

- einen Schritt (220, 620) des Ermittelns der Topologie des Netzwerks durch die Cluster-Heads, so dass jeder Cluster-Head über eine Beschreibung (330-335, 730) der Netzwerk-Topologie verfügt;

- einen Schritt (230, 630) des Austauschens von Multicast-Zugehörigkeitsinformationen zwischen den Cluster-Heads, so dass jeder Cluster-Head über eine Multicast-Zugehörigkeitstabelle ($S^M$) verfügt, die für jeden Cluster anzeigt, welche Multicast-Gruppe/n darin repräsentiert ist/sind;

- das Multicast-Datenpaket mittels einer Vielzahl von Cluster-Heads durch das Netzwerk geleitet wird, wobei jeder Cluster-Head auf Basis der Multicast-Gruppe ($m$), für die das Datenpaket bestimmt ist, der Multicast-Zugehörigkeitstabelle und der Beschreibung der Netzwerk-Topologie unabhängig über den/die nächsten Cluster-Head/s entscheidet, zu dem/denen, wenn vorhanden, das Paket weitergeleitet wird,.

2. Verfahren zum Routing eines Multicast-Datenpaketes nach Anspruch 1, **dadurch gekennzeichnet, dass** das Multicast-Datenpaket durch eine Datenquelle zu einer Vielzahl von Mitgliedern einer Multicast-Gruppe gesendet wird, wobei die Datenquelle zuerst das Paket zu dem Head des Clusters weiterleitet (240, 640), zu dem sie gehört.

3. Verfahren zum Routing eines Multicast-Datenpaketes nach Anspruch 1 oder 2, **dadurch gekennzeichnet, dass** die Multicast-Zugehörigkeitstabelle in Zusammenarbeit durch die Cluster-Heads erstellt wird, wobei jeder Cluster-Head bestimmt, welche Multicast-Gruppe/n in seinem eigenen Cluster repräsentiert ist/sind, und diese Information zu den anderen Cluster-Heads sendet.

4. Verfahren zum Routing eines Multicast-Datenpaketes nach einem der vorangehenden Ansprüche, **dadurch gekennzeichnet, dass** für jeden beliebigen Cluster-Head die Beschreibung der Netzwerk-Topologie eine Routing-Tabelle (330-335) umfasst, die als Einträge die möglichen Ziel-Cluster des Netzwerks aufweist, wobei jeder Eintrag bezüglich eines Ziel-Clusters einen Cluster des nächsten Hop zum Erreichen des Ziel-Clusters angibt.

5. Verfahren zum Routing eines Multicast-Datenpaketes nach Anspruch 4, **dadurch gekennzeichnet, dass** die Tabelle des Weiteren für jeden Ziel-Cluster eine Anzahl von Cluster-Hops zum Erreichen des Ziel-Clusters umfasst.

6. Verfahren zum Routing eines Multicast-Datenpaketes nach Anspruch 5, **dadurch gekennzeichnet, dass** die Routing-Tabelle zusammenwirkend von den Cluster-Heads erstellt wird, wobei jeder Cluster-Head:

   (a) eine Tabelle einrichtet, deren Einträge die benachbarten Cluster-Heads sind, und die Liste an sie weiterleitet;
   (b) an die Tabelle die Einträge der von den benachbarten Cluster-Heads empfangenen Tabellen anhängt, die noch nicht in der Tabelle vorhanden sind, nachdem ihre jeweilige Anzahl von Cluster-Hops inkrementiert worden ist;
   (c) die so aktualisierte Tabelle zu den benachbarten Cluster-Heads weiterleitet;

   wobei die Schritte (b) und (c) wiederholt werden, bis jede Tabelle als Einträge alle Cluster des Netzwerks mit Ausnahme des Clusters enthält, zu dem sie gehört.

7. Verfahren zum Routing eines Multicast-Datenpaketes nach Anspruch 6, **dadurch gekennzeichnet, dass** jeder Cluster-Head prüft, ob das Multicast-Datenpaket bereits empfangen worden ist, und wenn dies der Fall ist, dieses verwirft.

8. Verfahren zum Routing eines Multicast-Datenpaketes nach Anspruch 6 oder 7, **dadurch gekennzeichnet, dass** der Cluster-Head, der ein Multicast-Datenpaket empfängt, das noch nicht empfangen worden ist:

   (a) aus dem Datenpaket die Multicast-Gruppe ($m$) abfragt, für die es bestimmt ist;
   (b) aus der Multicast-Zugehörigkeitstabelle die Liste ($\Lambda_m$) von Ziel-Clustern herleitet, die der Multicast-Gruppe entsprechen;
   (c) wenn sein Cluster zu der Liste gehört, das Datenpaket zu den Knoten dieser Cluster weiterleitet, die zu der Multicast-Gruppe gehören.

9. Verfahren zum Routing eines Multicast-Datenpaketes nach Anspruch 8, **dadurch gekennzeichnet, dass** der Cluster-Head, der das Multicast-Datenpaket empfängt, das noch nicht empfangen worden ist, des Weiteren:

   (d) aus der Routing-Tabelle für jeden Ziel-Cluster der Liste von Ziel-Clustern bestimmt, zu welchem/welchen benachbarten Cluster-Head/s, wenn vorhanden, das Datenpaket weitergeleitet werden soll;
   (e) das Datenpaket zu jedem der Ziel-Cluster mit Ausnahme des einen weiterleitet, von dem es empfangen wurde.

10. Verfahren zum Routing eines Multicast-Datenpaketes nach einem der Ansprüche 1 bis 3, **dadurch gekennzeichnet, dass** die Beschreibung der Netzwerk-Topologie eine Liste (730) von Verbindungen zwischen den Clustern umfasst.

11. Verfahren zum Routing eines Multicast-Datenpaketes nach Anspruch 10, **dadurch gekennzeichnet, dass** die Liste von Verbindungen zusammenwirkend von den Cluster-Heads erstellt wird, wobei jeder Cluster-Head:

(a) eine Liste von Verbindungen zwischen seinem Cluster und den benachbarten Clustern einrichtet und die Liste zu den benachbarten Cluster-Heads weiterleitet;
(b) an die Liste die Verbindungen anhängt, die in den von den benachbarten Cluster-Heads empfangenen Listen aufgeführt werden und noch nicht in der Liste vorhanden sind,
(c) die so aktualisierte Liste von Verbindungen zu den benachbarten Cluster-Heads weiterleitet;

wobei die Schritte (b) und (c) wiederholt werden, bis jede Liste alle Verbindungen zwischen Clustern enthält.

12. Verfahren zum Routing eines Multicast-Datenpaketes nach Anspruch 11, **dadurch gekennzeichnet, dass** jeder Cluster-Head, der das Multicast-Datenpaket empfängt:

(a) aus dem Datenpaket die Multicast-Gruppe ($m$) abfragt, für die es bestimmt ist;
(b) aus der Multicast-Zugehörigkeitstabelle die Liste ($\Lambda_m$) von Ziel-Clustern herleitet, die der Multicast-Gruppe entsprechen;
(c) wenn sein Cluster zu der Liste gehört, das Datenpaket zu den Knoten dieser Cluster weiterleitet, die zu der Multicast-Gruppe gehören.

13. Verfahren zum Routing eines Multicast-Datenpaketes nach Anspruch 12, **dadurch gekennzeichnet, dass** jeder Cluster-Head, der das Multicast-Datenpaket empfängt, des Weiteren:

(d) aus der Liste von Verbindungen ($ICL$) den Routing-Baum bestimmt, der der Multicast-Gruppe entspricht;
(c) das Datenpaket über die Verbindungen, die von seinem Cluster ausgehen, mit Ausnahme der Verbindung weiterleitet, über die das Datenpaket empfangen wurde.

14. Verfahren zum Routing eines Multicast-Datenpaketes nach Anspruch 13, **dadurch gekennzeichnet, dass** jeder Routing-Baum in einem Cache-Speicher zum späteren Abrufen gespeichert wird.

## Revendications

1. Procédé d'acheminement de paquets de données multidiffusion dans un réseau ad hoc, ledit réseau étant partitionné en groupes de noeuds, chaque groupe ayant une tête de groupe, le procédé étant défini par :

- une étape (220, 620) de découverte de la topologie du réseau par lesdites têtes de groupe de sorte que chaque tête de groupe a une description (330-335, 730) de la topologie des réseaux ;
- une étape (230, 630) d'échange d'informations d'appartenance multidiffusion parmi lesdites têtes de groupe de sorte que chaque tête de groupe a un tableau d'appartenance multidiffusion ($S^M$) indiquant, pour chaque groupe, quel(s) groupe(s) multidiffusion y est (sont) représenté(s) ;
- lesdits paquets de données multidiffusion étant acheminés à travers le réseau par une pluralité de têtes de groupe, chaque tête de groupe décidant indépendamment de la (des) prochaine(s) tête(s) de groupe à qui acheminer le paquet, s'il y a lieu, sur la base du groupe multidiffusion ($m$) auquel est destiné le paquet de données, ledit tableau d'appartenance multidiffusion et ladite description de la topologie du réseau.

2. Procédé d'acheminement de paquets de données multidiffusion selon la revendication 1, **caractérisé en ce que** ledit paquet de données multidiffusion est envoyé par une source de données à une pluralité de membres d'un groupe multidiffusion, ladite source de données acheminant ledit premier (240, 640) paquet à la tête du groupe auquel il appartient.

3. Procédé d'acheminement d'un paquet de données multidiffusion selon la revendication 1 ou 2, **caractérisé en ce que** le tableau d'appartenance multidiffusion est constitué de façon coopérative par les têtes de groupe, chaque tête de groupe déterminant quel(s) groupe(s) multidiffusion est (sont) représenté(s) dans son propre groupe et envoyant cette information aux autres têtes de groupe.

4. Procédé d'acheminement d'un paquet de données multidiffusion selon l'une quelconque des revendications précédentes, **caractérisé en ce que**, pour chaque tête de groupe, ladite description de la topologie du réseau, comprend un tableau d'acheminement (330-335) ayant comme entrées les groupes de destination possibles du réseau, chaque entrée par rapport à un groupe de destination donnant un groupe de bond suivant pour atteindre ledit groupe de destination.

**5.** Procédé d'acheminement d'un paquet de données multidiffusion selon la revendication 4, **caractérisé en ce que** ledit tableau comprend en outre, pour chaque groupe de destination, un nombre de bonds de groupe pour atteindre ledit groupe de destination.

**6.** Procédé d'acheminement d'un paquet de données multidiffusion selon la revendication 5, **caractérisé en ce que** ledit tableau d'acheminement est constitué de façon coopérative par les têtes de groupe, chaque tête de groupe :

(a) établissant un tableau dont les entrées sont les têtes de groupe voisines et leur acheminant ladite liste ;
(b) joignant au dit tableau les entrées des tableaux reçus desdites têtes de groupe voisines qui ne sont pas déjà présentes dans ledit tableau, après avoir augmenté leur nombre respectif de bonds de groupe ;
(c) acheminant auxdites têtes de groupe voisines le tableau ainsi mis à jour ;

lesdites étapes (b) et (c) étant répétées jusqu'à ce que chaque tableau contienne comme entrées tous les groupes du réseau sauf le groupe auquel il appartient.

**7.** Procédé d'acheminement d'un paquet de données multidiffusion selon la revendication 6, **caractérisé en ce que** chaque tête de groupe vérifie si ledit paquet de données multidiffusion a déjà été reçu, et dans l'affirmative, le rejette.

**8.** Procédé d'acheminement d'un paquet de données multidiffusion selon la revendication 6 ou 7, **caractérisé en ce que** ladite tête de groupe recevant un paquet de données multidiffusion qui n'a pas été déjà reçu :

(a) extrait dudit paquet de données le groupe multidiffusion ($m$) auquel il est destiné ;
(b) déduit dudit tableau d'appartenance multidiffusion la liste ($\Lambda_m$) des groupes de destination correspondant au dit groupe multidiffusion ;
(c) si son groupe appartient à cette liste, achemine ledit paquet de données aux noeuds de ce groupe appartenant au dit groupe multidiffusion.

**9.** Procédé d'acheminement d'un paquet de données multidiffusion selon la revendication 8, **caractérisé en ce que** ladite tête de groupe recevant ledit paquet de données multidiffusion qui n'a pas encore été reçu, en outre :

(d) détermine depuis ledit tableau d'acheminement, pour chaque groupe de destination de la liste de groupes de destination, à quel(s) tête(s) de groupe voisine(s), s'il y a lieu, ledit paquet de données doit être acheminé ;
(e) achemine ledit paquet de données à chacun desdits groupes de destination sauf à celui de qui il a été reçu.

**10.** Procédé d'acheminement d'un paquet de données multidiffusion selon l'une des revendications 1 à 3, **caractérisé en ce que** la description de la topologie du réseau comprend une liste (730) de liens entre les groupes.

**11.** Procédé d'acheminement d'un paquet de données multidiffusion selon la revendication 10, **caractérisé en ce que** ladite liste de liens est constituée de façon coopérative par les têtes de groupe, chaque tête de groupe :

(a) établissant une liste de liens entre son groupe et les groupes voisins et acheminant ladite liste aux têtes de groupe voisines ;
(b) ajoutant à ladite liste les liens énumérés dans les listes reçues desdites têtes de groupe voisines qui ne sont pas déjà présents dans ladite liste,
(c) acheminant vers lesdites têtes de groupe voisines la liste de liens ainsi mise à jour ;

lesdites étapes (b) et (c) étant répétées jusqu'à ce que chaque liste contienne tous les liens entre les groupes.

**12.** Procédé d'acheminement d'un paquet de données multidiffusion selon la revendication 11, **caractérisé en ce que** chaque tête de groupe recevant ledit paquet de données multidiffusion :

(a) extrait dudit paquet de données le groupe multidiffusion ($m$) auquel il est destiné ;
(b) déduit dudit tableau d'appartenance multidiffusion la liste ($\Lambda_m$) des groupes de destination correspondant au dit groupe multidiffusion ;
(c) si son groupe appartient à cette liste, achemine ledit paquet de données aux noeuds de ce groupe appartenant au dit groupe multidiffusion.

13. Procédé d'acheminement d'un paquet de données multidiffusion selon la revendication 12, **caractérisé en ce que** chaque tête de groupe recevant ledit paquet de données multidiffusion, en outre :

(d) détermine de ladite liste de liens (*ICL*) l'arbre d'acheminement correspondant au dit groupe multidiffusion ;
(c) achemine ledit paquet de données sur les liens provenant de son groupe sauf le lien sur lequel ledit paquet de données a été reçu.

14. Procédé d'acheminement d'un paquet de données multidiffusion selon la revendication 13, **caractérisé en ce que** ledit arbre d'acheminement est stocké dans une mémoire cache pour une récupération ultérieure.

FIG.1

clustered network ⟩⟩ 210

network topology discovery — 220

collect & exchange multicast membership information — 230

$s \rightarrow L$ — 240

$\Delta_m$ — 250

look up distance vector routing table — 260

determine next hop cluster(s) — 270

forward data packet — 280

FIG.2

FIG.3A

EP 1 983 699 B1

310

**destination cluster | next hop cluster | nb.of hops**

| destination cluster | next hop cluster | nb.of hops |
|---|---|---|
| B | B | 1 |
| C | C | 1 |
| D | D | 1 |

312

| destination cluster | next hop cluster | nb.of hops |
|---|---|---|
| A | A | 1 |
| C | C | 1 |
| F | F | 1 |

315

| destination cluster | next hop cluster | nb.of hops |
|---|---|---|
| B | B | 1 |

311

| destination cluster | next hop cluster | nb.of hops |
|---|---|---|
| A | A | 1 |
| C | C | 1 |

313

| destination cluster | next hop cluster | nb.of hops |
|---|---|---|
| A | A | 1 |
| B | B | 3 |
| D | D | 1 |
| E | E | 1 |

314

| destination cluster | next hop cluster | nb.of hops |
|---|---|---|
| C | C | 1 |

EP 1 983 699 B1

# FIG.3B

322

| destination cluster | next hop cluster | nb. of hops |
|---|---|---|
| A | A | 1 |
| C | C | |
| D | | |
| I | C | |
| F | F | 1 |

325

| destination cluster | next hop cluster | nb. of hops |
|---|---|---|
| A | B | 2 |
| B | B | 1 |
| C | B | 2 |

324

| destination cluster | next hop cluster | nb. of hops |
|---|---|---|
| A | C | 2 |
| B | C | |
| C | C | 1 |
| D | C | 2 |

323

| destination cluster | next hop cluster | nb. of hops |
|---|---|---|
| A | A | 1 |
| B | B | 1 |
| D | D | 1 |
| E | E | 1 |
| F | B | 2 |

320

| destination cluster | next hop cluster | nb. of hops |
|---|---|---|
| B | B | 1 |
| C | C | 1 |
| D | D | 1 |
| E | C | 2 |
| F | B | 2 |

321

| destination cluster | next hop cluster | nb. of hops |
|---|---|---|
| A | A | 1 |
| B | C | 2 |
| C | C | 1 |
| E | C | 2 |

17

# FIG.3C

**330** (Node A table)

| destination cluster | next hop cluster | nb.of hops |
|---|---|---|
| B | B | 1 |
| C | C | 1 |
| D | D | 1 |
| E | C | 2 |
| F | B | 2 |

**331** (Node D table)

| destination cluster | next hop cluster | nb.of hops |
|---|---|---|
| A | A | 1 |
| B | C | 2 |
| C | C | 1 |
| E | C | 2 |
| F | C | 3 |

**332** (Node B table)

| destination cluster | next hop cluster | nb.of hops |
|---|---|---|
| A | A | 1 |
| C | C | 1 |
| D | C | 2 |
| E | C | 2 |
| F | F | 1 |

**333** (Node C table)

| destination cluster | next hop cluster | nb.of hops |
|---|---|---|
| A | A | 1 |
| B | B | 1 |
| D | D | 1 |
| E | E | 1 |
| F | B | 2 |

**334** (Node E table)

| destination cluster | next hop cluster | nb.of hops |
|---|---|---|
| A | C | 2 |
| B | C | 2 |
| C | C | 1 |
| D | C | 2 |
| F | C | 3 |

**335** (Node F table)

| destination cluster | next hop cluster | nb.of hops |
|---|---|---|
| A | B | 2 |
| B | B | 1 |
| C | B | 2 |
| D | B | 3 |
| E | B | 3 |

FIG.4

FIG.5

**$R_B$**

| destinat. cluster | next hop cluster |
|---|---|
| C | C |
| D | C |
| F | F |

**$R_F$**

| destinat. cluster | next hop cluster |
|---|---|
| C | B |
| D | B |
| F | F |

**$R_A$**

| destinat. cluster | next hop cluster |
|---|---|
| C | C |
| D | D |
| F | B |

**$R_C$**

| destinat. cluster | next hop cluster |
|---|---|
| C | C |
| D | D |
| F | B |

**$R_D$**

| destinat. cluster | next hop cluster |
|---|---|
| C | C |
| D | D |
| F | C |

**$R_E$**

| destinat. Cluster | next hop cluster |
|---|---|
| C | C |
| D | C |
| F | C |

clustered
network ⟋ 610

↓

network topology
discovery ⟋ 620

↓

collect & exchange
multicast membership
information ⟋ 630

↓

$s \longrightarrow L$ ⟋ 640

↓

$\Lambda_m$ ⟋ 650

↓

compute/ retrieve
source rooted routing tree ⟋ 660

↓

determine next hop cluster(s) ⟋ 670

↓

forward data packet ⟋ 680

# FIG.6

FIG.7A

EP 1 983 699 B1

720

| Inter-cluster links |
|---|
| A – B |
| A – C |
| A – D |

721

| Inter-cluster links |
|---|
| D – A |
| D – C |
| A – B |
| A – C |
| A – D |

| Inter-cluster links |
|---|
| B – A |
| B – C |
| B – F |
| A – B |
| A – C |
| A – D |

| Inter-cluster links |
|---|
| F – B |

| Inter-cluster links |
|---|
| C – A |
| C – B |
| C – D |
| C – E |
| A – B |
| A – C |
| A – D |

| Inter-cluster links |
|---|
| E – C |

FIG.7B

730

| Intra-cluster links |
|---|
| A – B |
| A – C |
| A – D |
| B – A |
| B – C |
| B – F |
| C – A |
| C – B |
| C – D |
| C – E |
| D – A |
| D – C |
| E – C |
| F – B |

A

B

C

D

E

F

FIG.7C

EP 1 983 699 B1

FIG.8

**EP 1 983 699 B1**

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1324532 A2

- WO 2006130278 A1

**Non-patent literature cited in the description**

- **YI-YU SU et al.** An efficient multi-source multicast routing protocol in mobile ad hoc networks. *Proc. of the 11th International Conference on Parallel and Distributed Systems,* July 2005, vol. 1, 8-14